# EUROPEAN PATENT APPLICATION

(11) **EP 4 834 565 A2**
(43) Date of publication of application: **04.11.2026**
(21) Application number: 26206545.1
(22) Date of filing: 22.09.2026
(51) Int. Cl.: B29C 64/124, B29C 64/255, B33Y 30/00

(54) **CURING TRAY, CURING DEVICE, AND PRINTER**

(30) Priority: 31.12.2025 CN 202522843897 U
(71) Applicant: Hangzhou SHINING3D Dental Technology Co., Ltd., Hangzhou , Zhejiang 311258 (CN)
(72) Inventor: Zheng, Zhishun, Hangzhou, 311258 (CN); Zhao, Xiaobo, Hangzhou, 311258 (CN); He, Junlin, Hangzhou, 311258 (CN); Chen, Da, Hangzhou, 311258 (CN)
(74) Representative: Metida

(57) **Abstract**

A curing tray 100, a curing device 200, and a printer 300 are provided according to embodiments of the present application. The curing tray 100 includes a tray body 110 and a support post 120. At least a portion of the tray body 110 is configured to be light-transmissive. The support post 120 is inserted into the tray body 110. A first end portion 122 of the support post 120 distal to the tray body 110 is configured to support a printed member 400. In use, the printed member 400 is placed on the support post 120, and the supporting surface 126 of the support post 120 supports the printed member 400, thereby reducing a contact area with an outer surface of the printed member 400. For a printed member 400 to be glazed, coated with photocurable resin, or coated with other brighteners on its surface, a risk of post-curing failure at the contact interface can be reduced.

## Description

### FIELD

The subject matter herein generally relates to 3D printing technologies, and more particularly, to a curing tray, a curing device, and a printer.

### BACKGROUND

Stereolithography 3D printing utilizes an ultraviolet light source or a light source of another specific wavelength range to irradiate liquid photosensitive resin and trigger a photochemical reaction, such that the photocurable resin in the region irradiated by the light source is cured from a liquid state into a molded shape. After layer-by-layer curing, an object to be molded can be obtained.

In methods or systems involved in stereolithography or digital light processing for stereolithography 3D printing, printed objects removed from a molding platform generally cannot be used directly, and need to undergo additional processes such as cleaning, post-curing, polishing, and the like.

Conventional 3D printing apparatuses generally utilize a flat tray as a support structure for post-curing. The flat tray is simple in structure and provides a relatively large contact area with a printed member. For printed members which required further processes such as glazing, coating with photocurable resin, or coating with other brighteners on surfaces of the printed members, post-curing failure may occur at the contact interface.

### BRIEF DESCRIPTION OF THE DRAWINGS

The accompanying drawings, which are incorporated into and constitute a part of this specification, illustrate embodiments consistent with the present application and, together with the description, serve to explain the principles of the present application.
FIG. 1 is a diagrammatic view of a curing tray provided by the present application.
FIG. 2 is a diagrammatic view of support posts and holes provided by the present application.
FIG. 3 is a diagrammatic view of a support post provided by the present application.
FIG. 4 is a front view of the support post shown in FIG. 3.
FIG. 5 is a top view of a dental crown provided by the present application.
FIG. 6 is a bottom view of the dental crown provided by the present application.
FIG. 7 is a diagrammatic view of a state in which a curing tray provided by the present application is taken out of a curing device.
FIG. 8 is a diagrammatic view of a state in which the curing tray is placed into a curing device.
FIG. 9 is an exploded view of a second curing box provided by the present application.

The drawings illustrate specific embodiments of the present application, which will be described in more detail hereinafter. These drawings and written descriptions are not intended to limit the scope of the inventive concept of the present application in any way, but rather to explain the concept of the present application to those skilled in the art with reference to specific embodiments.

### DETAILED DESCRIPTION

First, those skilled in the art will appreciate that these embodiments serve merely to explain the technical principles of the present application, and are not intended to limit the scope of protection of the present application. Those skilled in the art may modify the embodiments as necessary to accommodate particular applications.

Second, it should be noted that, in the description of the embodiments of the present application, unless otherwise explicitly specified and limited, the terms "connected" and "coupled" shall be understood in a broad sense. For example, the connection may be a fixed connection, a detachable connection, or an integral connection; it may be a mechanical connection or an electrical connection; it may be a direct connection or an indirect connection via an intermediate medium; it may be communication between the interiors of two components. Those skilled in the art can understand the specific meanings of the terms in the embodiments of the present application according to specific circumstances.

In methods or systems involved in stereolithography or digital light processing for stereolithography 3D printing, printed objects removed from a molding platform generally cannot be used directly, and need to undergo additional processes such as cleaning, post-curing, polishing, and the like.

Conventional 3D printing apparatuses generally utilize a flat tray as a support structure for post-curing. The flat tray is simple in structure and provides a relatively large contact area with a printed member. For printed members which required further processes such as glazing, coating with photocurable resin, or coating with other brighteners on surfaces of the printed members, post-curing failure may occur at the contact interface.

In view of the above-mentioned problems, a curing tray, a curing device, and a printer are provided according to some embodiments of the present application. The curing tray includes a tray body and at least one support post. At least a portion of the tray body is light-transmissive. The support post is inserted into the tray body, and a first end portion of the support post away from the tray body defines a supporting surface for a printed member.

The curing tray provided herein includes a support post disposed on the tray body, wherein the first end portion of the support post away from the tray body defines a supporting surface for a printed member. In use, the printed member is placed on the support post such that the supporting surface bears the printed member, thereby reducing the contact area with the outer surface of the printed member. For printed members to be glazed, coated with photocurable resin, or coated with other brighteners, the risk of post-curing failure at the contact interface is reduced.

For a clearer understanding of the objects, features, and advantages of the embodiments of the present application, the technical solutions in the embodiments of the present application will be described below in detail and fully with reference to the accompanying drawings. It will be appreciated that the described embodiments are merely some, rather than all, embodiments of the present application. All other embodiments obtained by a person of ordinary skill in the art based on the embodiments set forth herein without inventive effort shall fall within the scope of protection of the present application.

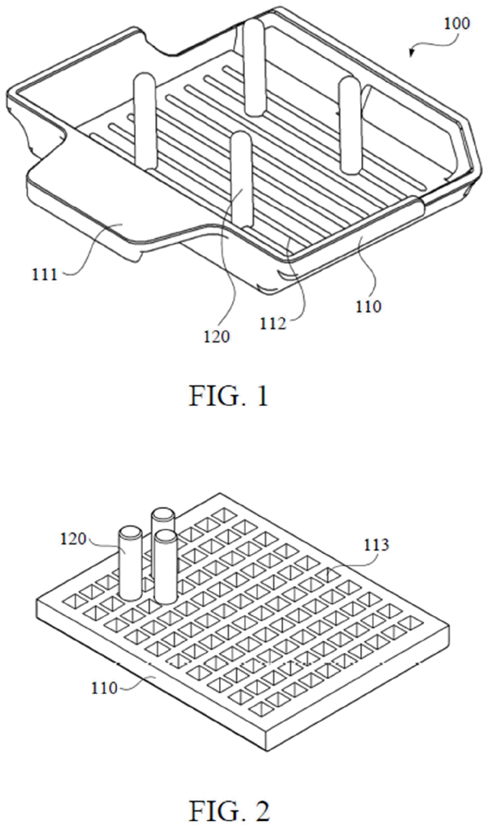

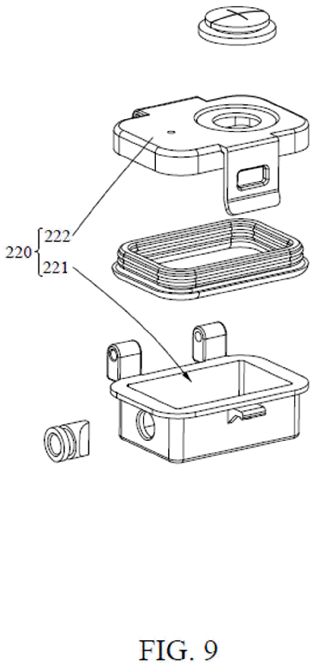

Referring to FIGS. 1 to 9, a first aspect of the embodiments of the present application provides a curing tray 100, including a tray body 110 and at least one support post 120. At least a portion of the tray body 110 is configured to be light-transmissive. The support post 120 is inserted into the tray body 110, and a first end portion 122 of the support post 120 facing away from the tray body 110 forms a supporting surface 126 for supporting a printed member 400.

The curing tray 100 provided herein is at least partially light-transmissive, allowing curing light (e.g., ultraviolet light) to pass through, so as not to interfere with curing of the printed member 400. The support post 120 is disposed on the tray body 110, and the first end portion 122 of the support post 120 away from the tray body 110 defines a supporting surface 126 for the printed member 400. In use, the printed member 400 rests on the support post 120 such that the supporting surface 126 carries the printed member 400, reducing the contact area between the outer surface of the printed member 400 and the curing tray 100, and preventing defects such as scratches and indentations resulting from contact between the outer surface and the curing tray 100. For printed members 400 to be glazed, coated with photocurable resin, or coated with other brighteners, the risk of post-curing failure at the contact interface is mitigated.

It can be understood that the curing tray 100 may be made of a transparent material such as plastic or glass, or may be made of an opaque material provided with through holes for light transmission, or may be made of a transparent material and also provided with through holes.

In some embodiments of the present application, referring to FIG. 1, the support post 120 is perpendicular to the tray body 110. It can be understood that the support post 120 may also be obliquely disposed on the tray body 110, as long as the supporting surface 126 at the first end portion 122 of the support post 120 is in contact with the printed member 400.

In some embodiments of the present application, referring to FIG. 1, the curing tray further includes a plurality of protrusions 112 disposed on an inner surface of the tray body 110. The plurality of protrusions 112 is parallel to each other and each of the plurality of protraction 112 is strip-shaped.

Once the support post 120 is removed, the tray body 110 may be used as a flat tray. The plurality of strip-shaped protrusions 112 are configured such that a printed member 400 placed thereon forms a gap between the printed member 400 and the surface of the tray body 110. Temperature significantly influences curing performance during the curing process. The gap between the printed member 400 and the surface of the tray body 110 promotes air flow and maintains a uniform temperature around the printed member 400, thereby enhancing curing quality.

In some embodiments of the present application, a circumferential dimension of the support post 120 ranges from 6 mm to 18 mm, and a height of the support post 120 ranges from 5 mm to 25 mm.

In some embodiments of the present application, the printed member 400 is a dental crown 400. A width of a common dental crown 400 is approximately 6 mm to 13 mm. A width of an opening of a fitting surface of the dental crown is substantially close to the width of the dental crown. The support post 120 having a circumferential dimension ranging from 6 mm to 18 mm and a height ranging from 5 mm to 25 mm can meet a use requirement of supporting the dental crown.

In some embodiments of the present application, referring to FIG. 1, a gripping portion 111 is disposed on an outer side of the tray body 110. The gripping portion 111 facilitates handling of the tray body 110 when the tray body 110 is picked up or placed.

In some embodiments of the present application, the support post 120 is detachably inserted into the tray body 110.

The support post 120 is detachably inserted into the tray body 110 such that the support post 120 may be removed and the tray body 110 used as a flat tray. The flat tray provides a large contact area with the dental crown, ensures stable placement, and yields a large cured tooth surface area upon irradiation by lamp beads, thereby improving the curing effect for printed members 400 such as dental veneers that are better suited for post-curing on a flat tray. The detachable connection between the support post 120 and the tray body 110 allows the curing tray 100 to combine the advantages of both tray types, rendering it suitable for a variety of dental restorations.

In some embodiments of the present application, referring to FIG. 2, a plurality of holes 113 are disposed on a surface of the tray body 110. The holes 113 are configured to be adapted to a second end portion 123 of the support post 120 facing the tray body 110.

By defining the plurality of holes 113 on the surface of the tray body 110, the second end portion 123 of the support post 120 is inserted into the holes 113 to achieve mounting of the support post 120, and the support post 120 is pulled out of the holes 113 to detach the support post 120, so that the tray body 110 can be used as a flat tray.

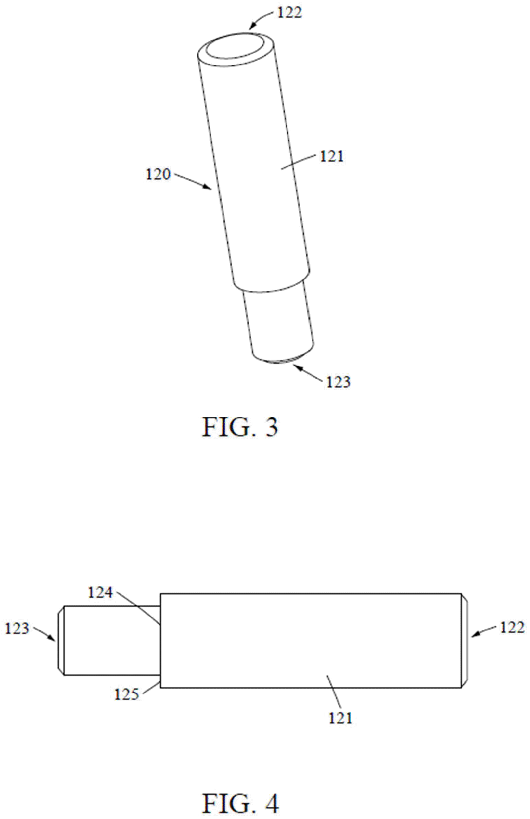

In some embodiments of the present application, referring to FIGS. 3 and 4, the support post 120 further includes a support post body 121 between the second end portion 123 and the first end portion 122. A surface of the support post body 121 opposite to the second end portion 123 includes a contact portion 124 and a non-contact portion 125. When the second end portion 123 is inserted into the hole 113, the non-contact portion 125 abuts against a periphery of the hole 113.

The non-contact portion 125 abutting against the periphery of the hole 113 can axially limit the support post 120, that is, prevent the support post 120 from further moving toward the tray body 10.

In some embodiments of the present application, the non-contact portion 125 extends over a hole adjacent to the hole 113, or the non-contact portion 125 does not contact the hole adjacent to the hole 113. That is, when adjacent holes 113 are relatively close to each other, a portion of the non-contact portion 125 abuts against a peripheral region of the hole 113 of the tray body 110, and another portion covers above the adjacent hole. When adjacent holes are relatively far apart, the entire non-contact portion 125 abuts against the peripheral region of the hole 113 of the tray body 110 without contacting other holes.

In other examples, the circumferential dimension of the support post is relatively large, so that the non-contact portion may still abut against a surface of another hole even if adjacent holes are relatively far apart or appropriately spaced. In yet other examples, the circumferential dimension of the support post is relatively small, so that the non-contact portion may not abut against a surface of another hole even if adjacent holes are relatively close or appropriately spaced.

In some embodiments of the present application, the holes disposed on the surface of the tray body 110 are threaded holes. The second end portion 123 of the support post 120 is provided with an external thread that matches the threaded hole. When the support post 120 needs to be used, the second end portion 123 of the support post 120 is screwed into the threaded hole to complete mounting of the support post 120. When the support post 120 does not need to be used, the support post 120 is unscrewed from the threaded hole to complete detachment of the support post 120.

In some embodiments of the present application, the hole 113 is a circular hole, and the second end portion 123 is a cylinder. It can be understood that the hole 113 may also be a square hole or another shape, as long as a shape of the second end portion 123 matches a shape of the hole.

In some embodiments of the present application, the plurality of holes 113 is disposed in arrays on the surface of the tray body 110. Or alternatively, the plurality of holes 113 is randomly dispersed on the surface of the tray body 110, wherein at least some of the holes 113 penetrate through the tray body 110.

By defining the plurality of holes 113 disposed in arrays or randomly dispersed on the surface of the tray body 110, the support posts 120 can be inserted into corresponding holes 113 according to actual needs, so as to facilitate supporting of different printed members 400. Some or all of the holes 113 penetrate through the tray body 110, so that curing light can pass through the penetrating holes 113 to cure the printed member 400.

In some embodiments of the present application, a plurality of the support posts 120 are provided and spaced apart on a surface of the tray body 110.

When a size of a printed member 400 is small, each support post 120 can support one printed member 400, so that a plurality of printed members 400 can be supported on one curing tray 100 at the same time, thereby achieving an effect of curing a plurality of printed members 400 in one operation. When a size of a printed member 400 is large, one printed member 400 can also be supported by a plurality of support posts 120, thereby improving support stability.

In some embodiments of the present application, referring to FIG. 1, the plurality of the support posts 120 is four, and a spacing between adjacent support posts 120 is not less than 15 mm.

In some embodiments, the printed member 400 is a dental crown, and a width of the dental crown is approximately 6 mm to 13 mm. By setting the spacing between adjacent support posts 120 to be not less than 15 mm, surface defects caused by contact between adjacent dental crowns can be avoided, and post-curing operations by a user are facilitated. Four support posts 120 are disposed to cure four dental crowns at the same time. It can be understood that the plurality of the support posts 120 may also be set to other numbers, which is not limited in the present application.

In some embodiments of the present application, the plurality of support posts 120 are movably inserted into the tray body 110. By movably connecting the plurality of support posts 120 to the tray body 110, positions of the support posts 120 can be adjusted, so that the curing tray is applicable to supporting printed members 400 of different sizes and shapes.

In some embodiments of the present application, the tray body 110 is provided with a plurality of sliding grooves (not shown), and the support posts 120 are slidably disposed in the sliding grooves and fixed to the tray body 110 by locking nuts (not shown).

Specifically, the sliding grooves are T-shaped grooves. End portions of the support posts 120 are embedded in the T-shaped grooves and can slide along the T-shaped grooves, and positions of the support posts 120 can be fixed to the tray body 110 by the locking nuts. The plurality of the sliding grooves may be plural and mutually perpendicular, and a plurality of support posts 120 may be disposed in each sliding groove. Horizontal or vertical position adjustment of the support posts 120 is achieved by sliding the support posts 120 in the T-shaped grooves, thereby supporting printed members 400 of different types, sizes, and shapes.

In some embodiments of the present application, the support posts 120 is fixed to the tray body 110. For example, the tray body 110 and the support posts 120 may be integrally formed, which reduces manufacturing processes and improves production efficiency.

In some embodiments of the present application, the entire tray body 110 is configured to be light-transmissive, and the tray body 110 is made of a light-transmissive material. With the tray body 110 formed of a light-transmissive material, a superior light transmission effect is achieved as compared to a configuration that transmits light through holes, thereby improving curing efficiency.

In some embodiments of the present application, the printed member 400 includes a shell 401 and an opening 402 located on the shell 401, and an inner surface of the shell 401 abuts against the supporting surface 126 through the opening 402.

The support post 120 passes through the opening 402 on the shell 401, so that the supporting surface 126 abuts against the inner surface of the shell 401 without contacting an outer surface of the printed member 400, thereby preventing defects such as scratches and depressions caused by contact between the outer surface and the tray, and improving surface quality of the printed member 400.

Applications of stereolithography 3D printing in dentistry have covered multiple links from diagnosis to treatment. The technology can be used to manufacture products such as dental models, cast dental crowns, temporary dental crowns, and implant guides, enabling rapid and precise manufacturing of personalized restorations, greatly shortening a treatment cycle and improving treatment effects.

In the related art, a flat tray is typically employed as a support structure for curing a dental crown. The flat tray is simple in structure, provides a large contact area with the dental crown, ensures stable placement, and produces a large cured tooth surface area upon irradiation by lamp beads, thereby enabling satisfactory curing of the dental crown on the tray. However, the flat tray has disadvantages. For a dental crown to be glazed, coated with photocurable resin, or coated with other brighteners, post-curing failure may arise at the contact interface. The primary cause is that the surface of the glazed dental crown readily contacts the flat tray, and defects such as scratches and indentations form on the glazed surface due to pressure, temperature variation, or surface adhesion during curing, thereby degrading the surface quality of the dental crown. Although post-curing may be performed to remedy such surface defects, this extends the duration of the post-curing process, increases fabrication costs, and reduces working efficiency.

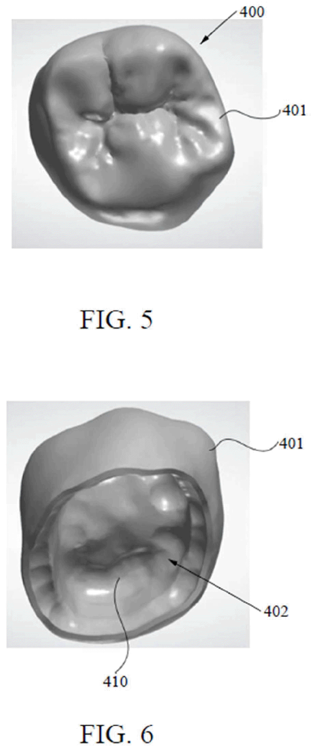

In some embodiments of the present application, referring to FIGS. 5 and 6, the printed member 400 is a dental crown, and an opening 402 is disposed on the dental crown. When the dental crown is cured, an inner surface 410 of the dental crown abuts against a supporting surface 126 of the support post 120 through the opening 402.

In use, a printed dental crown is placed on the support post 120. The support post 120 passes through the opening 402 such that the supporting surface 126 abuts against the inner surface 410 of the dental crown, and the support post 120 does not contact an outer surface of the dental crown, thereby preventing defects such as scratches and depressions on a dental glaze surface caused by contact between the outer surface and the tray, and improving surface quality of the dental crown.

A second aspect of the embodiments of the present application provides a curing device 200, including a first curing box 210 having a first inner cavity 211 and a box door 212 for opening and closing the first inner cavity 211; and the curing tray 100 according to the first aspect, wherein the curing tray 100 can be placed in the first inner cavity 211 and taken out of the first inner cavity 211.

When curing the printed member 400, the printed member 400 is first placed on the curing tray 100, then the box door 212 is opened to place the curing tray 100 into the first inner cavity 211, and a curing operation is performed on the printed member 400 by the first curing box 210. After curing is completed, the curing tray 100 is taken out of the first inner cavity 211. Since the curing device 200 in the embodiment includes the curing tray 100 described in any of the embodiments, the curing device 200 has structures and beneficial effects of the curing tray 100, which are not repeatedly described in this embodiment.

In some embodiments of the present application, the curing device 200 further includes a second curing box 220 having a second inner cavity 221 and a box lid 222 for opening and closing the second inner cavity 221, wherein the second curing box 220 can be placed into the first inner cavity 211 and taken out of the first inner cavity 211; and the curing tray 100 can be placed in the second inner cavity 221 and taken out of the second inner cavity 221.

When curing the printed member 400, the printed member 400 can be placed on the curing tray 100, then the curing tray 100 is placed into the second inner cavity 221 of the second curing box 220, and then the second curing box 220 is placed into the first inner cavity 211 of the first curing box 210 for a curing operation. The second curing box 220 is provided with the box lid 222 for opening and closing the second inner cavity 221, and at least one of nitrogen, carbon dioxide, or an inert gas can be filled into the second curing box 220 to displace oxygen therein, thereby avoiding an oxygen inhibition phenomenon during curing.

In some embodiments of the present application, one side of the box door 212 is hinged to the first curing box 210, and another side of the box door 212 is snap-fitted or magnetically connected to the first curing box 210.

In other embodiments of the present application, the first curing box 210 is a drawer, and the box door 212 is a front panel of the drawer.

Embodiments of the present application further provide a curing device 200, including a first curing box 210 having a first inner cavity 211 and a box door 212 for opening and closing the first inner cavity 211; a second curing box 220 having a second inner cavity 221 and a box lid 222 for opening and closing the second inner cavity 221, wherein the second curing box 220 can be placed into the first curing box 210 and taken out of the first curing box 210; and the curing tray 100 according to the first aspect, wherein the curing tray 100 can be placed in the second inner cavity 221 and taken out of the second inner cavity 221.

In some embodiments of the present application, one side of the box door 212 is hinged to the first curing box 210, and another side of the box door 212 is snap-fitted or magnetically connected to the first curing box 210; or the first curing box 210 is a drawer, and the box door 212 is a front panel of the drawer.

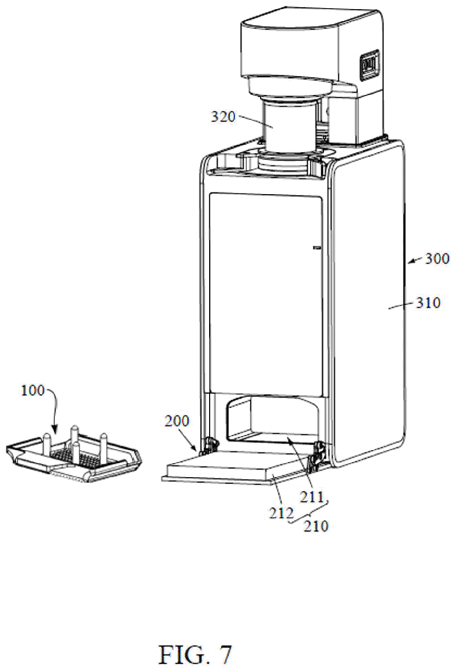

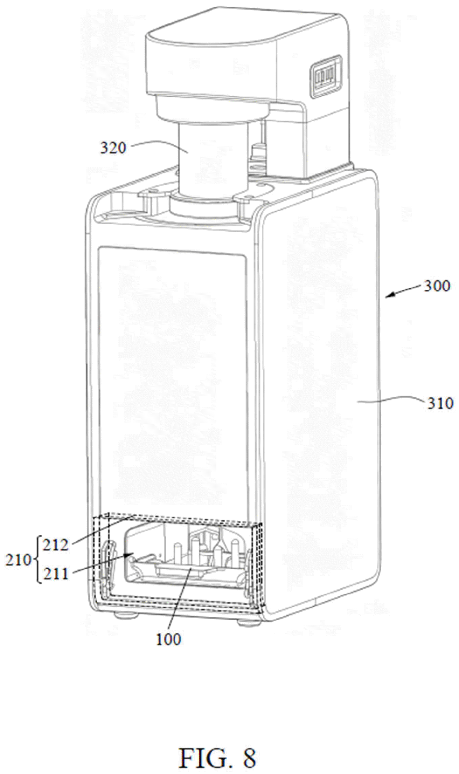

Embodiments of the present application further provide a printer 300. Referring to FIGS. 7 and 8, the printer 300 includes a printer body 310 and the curing device 200 according to any of the embodiments, wherein the curing device 200 is disposed inside the printer body 310, for example, at a bottom of the printer body 310.

By disposing the curing device 200 inside the printer 300, post-curing can be performed directly beside the printer 300 after printing of the dental crown by the printer body 310 is completed, greatly improving efficiency of an entire post-processing process.

In some examples, the printer may be a digital light processing printer.

In some examples, photosensitive resin used in a digital light processing printer is stored in capsules. The capsules are made of, for example, plastic and designed for single use or multiple uses (e.g., fractional use of a total amount without refilling new resin). Therefore, sizes of the resin capsules can vary according to an amount of resin to be stored or an amount of resin required for a 3D printing process.

It can be understood that the resin capsule may further include an inner housing movable in a vertical direction, such that an object to be constructed grows layer by layer starting from a molding platform on a surface of the resin capsule. In this case, each time the inner housing of the resin capsule moves upward by one layer, remaining resin in the inner housing automatically flows (due to gravity) into a layer between the molding platform and the inner housing, enabling layer-by-layer construction.

A digital light processing printer may include an accommodation cavity 320 for removably attaching a resin capsule at an operating position in the digital light processing printer, and may further include a moving cantilever adapted to the inner housing of the resin capsule, to ensure that movement of the moving cantilever or a mechanism in the moving cantilever can drive the inner housing of the resin capsule to move in a vertical direction, for example, move in accordance with a printing task or process.

Only one accommodation cavity for one resin capsule is shown in the figures herein, but a digital light processing printer may include two or more receiving cavities, and/or a single accommodation cavity may be configured to receive two or more resin capsules. In addition, mechanisms in the moving cantilever for controlling resin movement of the resin capsules may also be two or more, and/or a single mechanism may be configured to connect and control two or more resin capsules.

Since resin materials are relatively expensive and professional, physical properties, chemical compatibility, and batch consistency of resin materials affect molding quality, color accuracy, and even possible physiological effects on organisms of a final product. Therefore, it is also necessary to manage resin capsules.

In some examples, a resin capsule may include a label (e.g., a graphical or electronic label) having information about resin contained in the specific resin capsule or the resin capsule itself. The information may include, for example, one or more of the following: a label of the resin contained in the resin capsule, an identifier of an amount of the resin contained in the resin capsule, a manufacturing date of the resin contained in the resin capsule, a shelf life of the resin contained in the resin capsule, a unique label of the resin capsule, and a digital signature of a provider of the resin contained in the resin capsule. A digital light processing printer can acquire label information by, for example, capturing a label image, via IR, NFC, or the like, to instruct or control the digital light processing printer. For example, the label may include material remaining amount information of the resin capsule. When the digital light processing printer recognizes that the material remaining amount information does not match a printing task (e.g., insufficient material), the digital light processing printer may issue a reminder or be disabled from being controlled to perform the printing task.

Each embodiment or implementation mode in this specification is described in a progressive manner. Each embodiment focuses on differences from other embodiments, and the same or similar parts of the embodiments may be referred to each other.

It should be noted that the terms "one embodiment", "an embodiment", "an exemplary embodiment", "some embodiments", and the like mentioned in the specification indicate that the embodiments may include specific features, structures, or characteristics, but not every embodiment necessarily includes the specific features, structures, or characteristics. In addition, such phrases do not necessarily refer to the same embodiment. In addition, when specific features, structures, or characteristics are described in conjunction with an embodiment, implementation of such features, structures, or characteristics in conjunction with other embodiments explicitly or implicitly described falls within the knowledge scope of those skilled in the art.

Finally, it should be noted that those skilled in the art will readily think of other embodiments of the present application after considering the specification and practicing the application disclosed herein. The present application is intended to cover any variations, uses, or adaptive changes of the present application. These variations, uses, or adaptive changes follow the general principles of the present application and include common general knowledge or conventional technical means in the technical field that are not disclosed in the present application. The present application is not limited to the precise structures described above and shown in the accompanying drawings, and various modifications and changes can be made without departing from the scope thereof. The scope of the present application is limited only by the appended claims.

## Claims

1. A curing tray (100), comprising:
a tray body (110), at least a portion of the tray body (110) configured to be light-transmissive; and
at least one support post (120), inserted into the tray body (110), a first end portion (122) of the at least one support post (120) away from the tray body (110) configured as a supporting surface (126) for supporting a printed member (400).

2. The curing tray (100) of claim 1, wherein the curing tray (100) further comprises
a plurality of protrusions (112) disposed on the surface of the tray body (110), wherein the plurality of protrusions (112) is parallel to each other and each of the plurality of protrusions (112) is strip-shaped; and/or
wherein a circumferential dimension of the at least one support post (120) ranges from 6 mm to 18 mm, and a height of the at least one support post (120) ranges from 5 mm to 25 mm; and/or
wherein the curing tray (100) further comprises a gripping portion (111) disposed on an outer side of the tray body (110).

3. The curing tray (100) of claim 1, wherein a plurality of holes (113) is disposed on the surface of the tray body (110), and the plurality of holes (113) is configured to be adapted to a second end portion (123) of the at least one support post (120) facing the tray body (110).

4. The curing tray (100) of claim 3, wherein the at least one support post (120) further comprises a support post body (121) between the second end portion (123) and the first end portion (122), a surface of the support post body (121) opposite to the second end portion (123) comprises a contact portion (124) and a non-contact portion (125), and in a case that the second end portion (123) is inserted into a hole (113) of the plurality of holes (113), the non-contact portion (125) abuts against a periphery of the hole (113).

5. The curing tray (100) of claim 4, wherein the non-contact portion (125) extends over a hole (113) adjacent to the hole (113), or the non-contact portion (125) does not contact the hole (113) adjacent to the hole (113).

6. The curing tray (100) of claim 3, wherein the plurality of holes (113) are circular holes (113), and the second end portion (123) is a cylinder.

7. The curing tray (100) of claim 3, wherein the plurality of holes (113) is disposed in arrays on the surface of the tray body (110), or the plurality of holes (113) is randomly dispersed on the surface of the tray body (110), and wherein at least some of the plurality of holes (113) penetrate through the tray body (110).

8. The curing tray (100) of claim 1, wherein the at least one support post (120) is detachably inserted into the tray body (110); and/or the tray body (110) comprises a plurality of sliding grooves, and the at least one support post (120) is slidably disposed in the plurality of sliding grooves and configured to be fixed to the tray body (110) by a locking nut.

9. The curing tray (100) of claim 1, wherein the at least one support post (120) is fixed to the tray body (110); and/or
an entirety of the tray body (110) is configured to be light-transmissive; and/or
the supporting surface (126) is configured to support a shell (401) of the printed member (400) by abutting against an inner surface (410) of the shell (401) through an opening (402) in the shell (401).

10. The curing tray (100) of claim 1, wherein the at least one support post (120) comprises a plurality of support posts (120), the plurality of support posts (120) are spaced apart from each other and disposed on the tray body (110).

11. The curing tray (100) of claim 10, and wherein a spacing between adjacent support posts (120) of the plurality of support posts (120) is not less than 15 mm.

12. A curing device (200), comprising:
a first curing box (210) defining a first inner cavity (211) and comprising a box door (212) configured to open and close the first inner cavity (211); and
a curing tray (100) removably received in the first inner cavity (211), the curing tray (100) comprising:
a tray body (110), at least a portion of the tray body (110) configured to be light-transmissive; and
at least one support post (120), inserted into the tray body (110), a first end portion (122) of the at least one support post (120) away from the tray body (110) configured as a supporting surface (126) for supporting a printed member (400).

13. The curing device (200) of claim 12, further comprising a second curing box (220) comprising a second inner cavity (221) and a box lid (222) configured to open and close the second inner cavity (221), wherein the second curing box (220) is removably received in the first inner cavity (211); and the curing tray (100) is removably received in the second inner cavity (221).

14. The curing device (200) of claim 12, wherein one side of the box door (212) is hinged to the first curing box (210), and another side of the box door (212) is configured to engage the first curing box (210) by a snap connection or a magnetic connection;
or the first curing box (210) is a drawer, and the box door (212) is a front panel of the drawer.

15. A printer (300), comprising:
a printer body (310); and
a curing device (200) disposed inside the printer body (310), the curing device (200) comprising:
a first curing box (210) defining a first inner cavity (211) and comprising a box door (212) configured to open and close the first inner cavity (211); and
a curing tray (100) removably received in the first inner cavity (211), the curing tray (100) comprising:
a tray body (110), at least a portion of the tray body (110) configured to be light-transmissive; and
at least one support post (120), inserted into the tray body (110), a first end portion (122) of the at least one support post (120) away from the tray body (110) configured as a supporting surface (126) for supporting a printed member (400).
